# EUROPEAN PATENT APPLICATION

(11) **EP 4 538 337 A1**
(43) Date of publication of application: **16.04.2025**
(21) Application number: 23819462.5
(22) Date of filing: 17.03.2023
(51) Int. Cl.: C09D 11/324, C09D 11/36, B41M 5/00, B41J 2/01

(54) **NON-AQUEOUS INKJET INK COMPOSITION**

(30) Priority: 08.06.2022 JP 2022093174
(71) Applicant: Sakata INX Corporation, Osaka-shi, Osaka 550-0002 (JP)
(72) Inventor: KINJOH, Jun, Osaka-shi, Osaka 550-0002 (JP); OKAMOTO, Takuya, Osaka-shi, Osaka 550-0002 (JP); KAWAMOTO, Kenji, Osaka-shi, Osaka 550-0002 (JP); KONO, Shun, Osaka-shi, Osaka 550-0002 (JP); NAKASHIMA, Okinori, Osaka-shi, Osaka 550-0002 (JP)
(74) Representative: Grünecker Patent- und Rechtsanwälte PartG mbB
(86) International application number: PCT/JP2023/010596
(87) International publication number: WO 2023/238475

(57) **Abstract**

An object is to provide an inkjet ink composition exhibiting excellent discharge stability and drying property even when the inkjet ink composition is printed on a target base printing material whose printing face is constituted by resin, etc., while also proving printable, on a target printed matter being a resin base material that has already been partially printed, under conditions that prevent the target base printing material or any printed area already formed thereon from being affected by heat, as well as to provide a method for printing the inkjet ink composition. As a means for achieving the object, a non-aqueous inkjet ink composition for printing on a resin base material is provided, which contains: 2.5 to 10.0% by mass of carbon black;
80.0% by mass or more of organic solvent(s) whose evaporation rate is 20 to 80 based on the evaporation rate of butyl acetate being 100;
and a resin; and
which has a property to dry under irradiation of infrared light.

## Description

### Technical Field

The present invention relates to a non-aqueous inkjet ink composition whose target printing faces are base material surfaces constituted by resins as well as surfaces of printed areas already formed on arbitrary material surfaces.

### Background Art

As described in Patent Literature 1, non-aqueous inkjet ink compositions which contain pigments, resins, dispersants, and organic solvents, and whose target base printing materials are resins, are known.

These non-aqueous inkjet ink compositions allow for printing of desired images, etc., by drying immediately after printing as the organic solvents quickly evaporate.

However, any such non-aqueous inkjet printing ink composition may, due to its good drying property or for other reasons, cause some nozzles to misfire, or specifically, fail to discharge the non-aqueous inkjet printing ink composition when the ink composition is discharged continuously and then the discharge is stopped and subsequently resumed. This necessitates cleaning or other intervention, or forces switching to a non-aqueous inkjet printing ink composition that does not dry quickly.

A need for cleaning or other intervention is a cause of drop in the productivity of printed matters, while switching to a non-aqueous inkjet printing ink composition that does not dry quickly gives rise to a concern for bleed-through-a phenomenon that occurs when printed matters are placed on top of each other after printing, where the ink composition in the printed area of the bottom layer transfers to the back side of the printed matter on top.

Although methods for heating and thus drying inkjet ink compositions immediately after printing are known, the inkjet ink compositions of interest here are either aqueous or containing water, which means that these are methods for printing by way of heating and thus evaporating this water. Such printing methods involving heat drying can be adopted primarily when the base printing material is paper. When resin is used as the base printing material, the resin base printing material will suffer heat-induced deformation or wrinkling at least partially, even if only a partial face of the base printing material is printed, because heat-drying devices are constructed to heat the entire face of the base printing material.

Additionally, when drying is attempted by irradiation of infrared light, and printing and drying is performed continuously to quickly obtain multiple printed matters, the irradiation intensity of infrared light must be raised. This achieves drying of the printed ink composition, but because the base printing material is also heated at the same time and the heating temperature is too high, the base printing material or any printed area already formed thereon can be deformed, wrinkled, or otherwise damaged.

Also, when a base printing material that was partially printed in a first printing pass undergoes a second printing pass targeting the printed area and/or any non-printed area, and the second printing pass is accompanied by heat drying, the base printing material or area printed in the first printing pass can be wrinkled, deformed, or otherwise damaged by heat.

### Background Art Literature

### Patent Literature

Patent Literature 1: Japanese Patent Laid-open No. 2018-59106

### Summary of the Invention

### Problems to Be Solved by the Invention

An object of the present invention is to provide an inkjet ink composition exhibiting excellent discharge stability and drying property even when the inkjet ink composition is printed on a target base printing material whose printing face is constituted by resin, etc., while also proving printable, on a target printed matter being a resin base material that has already been partially printed, under conditions that prevent the target base printing material or any printed area already formed thereon from being affected by heat, as well as to provide a method for printing the inkjet ink composition.

### Means for Solving the Problems

After studying in earnest to achieve the aforementioned object, the inventors of the present invention found that the aforementioned object could be achieved by organic solvents meeting a specific compositional makeup, and eventually completed the present invention.

Specifically, the present invention is as follows.
1. A non-aqueous inkjet ink composition for printing on a resin base material, containing:
   2.5 to 10.0% by mass of carbon black;
   80.0% by mass or more of organic solvent(s) whose evaporation rate is 20 to 80 based on the evaporation rate of butyl acetate being 100; and
   a resin; and
   having a property to dry under irradiation of infrared light.
2. The non-aqueous inkjet ink composition according to 1, intended for printing on a printed layer provided on a resin base material.
3. The non-aqueous inkjet ink composition according to 1 or 2, wherein the resin contained in the non-aqueous inkjet ink composition comprises at least one type, or more types, selected from acrylic-based resins, cellulose-based resins, and vinyl chloride-vinyl acetate-based resins.
4. The non-aqueous inkjet ink composition according to any of claims 1 to 3, containing 80.0% by mass or more of organic solvent(s) whose evaporation rate is 30 to 60 based on the evaporation rate of butyl acetate being 100.
5. A method for printing with a non-aqueous inkjet ink composition, comprising:
   inkjet-printing on a target base printing material constituted by resin and/or printed area already formed on the target base printing material surface, using a non-aqueous inkjet ink composition containing:
      2.5 to 10.0% by mass of carbon black;
      80.0% by mass or more of organic solvent(s) whose evaporation rate is 20 to 80 based on the evaporation rate of butyl acetate being 100; and
      a resin; and
   drying by irradiation of infrared light.

### Effects of the Invention

The non-aqueous inkjet ink composition proposed by the present invention contains an acrylic-based resin, a pigment, a pigment dispersant, and organic solvents meeting a specific compositional makeup.

This allows the present invention to demonstrate, as a heat-drying type ink composition for printing on resin base materials, the effects of excellent drying property, good discharge stability from inkjet printer nozzles, and printability under conditions that prevent damage to the base printing material or any printed area already formed thereon.

### Modes for Carrying Out the Invention

### (Carbon Blacks)

The carbon black under the present invention may be any carbon black used for inks. When only a lactam black, perylene black, solvent black such as Solvent Black 29, or any of various types of disperse blacks, direct blacks, acid blacks, and other black colorants that are not carbon black is contained, sufficiently heat-drying the non-aqueous inkjet ink composition becomes difficult. Of those black colorants capable of absorbing infrared light, particularly near infrared light, to generate heat, a carbon black must be selected.

One type of carbon black can be used, or two or more types can be mixed, where the use quantity is 2.5% by mass or higher but no higher than 10% by mass relative to the total quantity of non-aqueous inkjet ink composition. Further, preferably it is 3.0% by mass or higher. Also, it is preferably 9.0% by mass or lower, or more preferably 8.5% by mass or lower, or yet more preferably 8.0% by mass or lower, or most preferably 5.0% by mass or lower. If it accounts for less than 2.5% by mass, the energy of infrared light to be irradiated must be increased excessively in order to dry the printed non-aqueous inkjet ink composition, in which case the temperature of the resin base material constituting the target base printing material becomes too high, leading to high likelihood of the resin base material surface becoming wrinkled, warped, deformed, or otherwise damaged. Weakening the energy of infrared light to be irradiated in order to prevent such damage from occurring lowers dryness of the ink composition. If it accounts for more than 10.0% by mass, on the other hand, the viscosity rises, and the discharge stability of the non-aqueous inkjet ink composition drops. Also, no effect of further improvement in dryness can be expected by irradiating infrared light with greater energy.

### (Colorants Other Than Carbon Blacks)

For the colorants other than carbon blacks that may be contained in the non-aqueous inkjet ink composition proposed by the present invention, any known inorganic and organic pigments, dyes, black colorants that are not carbon black, and the like conventionally used in non-aqueous inkjet ink compositions can be used to the extent that doing so does not impair the effects of the present invention.

Specific examples of the inorganic pigments include titanium oxide, zinc white, zinc oxide, Tholipone, iron oxide, aluminum oxide, silicon dioxide, kaolinite, montmorillonite, talc, barium sulfate, calcium carbonate, silica, alumina, cadmium red, red iron oxide, molybdenum red, chrome vermillion, molybdate orange, chrome yellow, chrome yellow, cadmium yellow, yellow iron oxide, titanium yellow, chrome oxide, piridian, cobalt green, titanium cobalt green, cobalt chrome green, ultramarine blue, ultramarine blue, Prussian blue, cobalt blue, cerulean blue, manganese violet, cobalt violet, mica, and the like.

Also, specific examples of the organic pigments include azo-based, azomethine-based, polyazo-based, phthalocyanine-based, quinacridone-based, anthraquinone-based, indigo-based, thioindigo-based, quinophthalone-based, benzimidazolone-based, isoindoline-based, isoindolinone-based, and other organic pigments, where specific examples indicated by the color index include Pigment Black 7, Pigment Blue 15, 15:1, 15:3, 15:4, 15:6, 60, Pigment Green 7, 36, Pigment Red 9, 48, 49, 52, 53, 57, 97, 122, 149, 168, 177, 178, 179, 206, 207, 209, 242, 254, 255, Pigment Violet 19, 23, 29, 30, 37, 40, 50, Pigment Yellow 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, Pigment Orange 36, 43, 51, 55, 59, 61, 71, 74, and the like.

It should be noted that metal pigments may or may not be contained. Specific examples of the dyes include anionic dyes, cationic dyes, nonionic dyes, amphoteric ionic dyes, and various other types of known dyes.

### (Resins)

The non-aqueous inkjet ink composition proposed by the present invention contains a resin. Any resin that can be contained must dissolve sufficiently in the solvents under the present invention and be able to form a film post-printing. The non-aqueous inkjet ink composition proposed by the present invention dries when heated and forms a film over the printed area; it does not contain any resin whose reactive components form a resin film by reacting when heated.

Among the resins that can be used, one or more types selected from acrylic-based resins, cellulose-based resins, vinyl-chloride-vinyl-acetate-based resins, etc., is/are preferred.

The resin content relative to the total quantity of non-aqueous inkjet ink composition is preferably 1.0% by mass or higher, or more preferably 3.0% by mass or higher, or yet more preferably 5.0% by mass or higher. Also, it is preferably 20.0% by mass or lower, or more preferably 15.0% by mass or lower, or yet more preferably 12.0% by mass or lower. If it is under 1.0% by mass, it may be difficult for the ink composition to reliably form a printed layer due to its insufficient fixability to the base material, while if it exceeds 20.0% by mass, it may be difficult to print the ink composition in a state ensuring excellent discharge stability.

### (Acrylic-based Resins)

The acrylic-based resins that may be contained in the non-aqueous inkjet ink composition proposed by the present invention include polymers constituted by (meth)acrylates soluble in organic solvents, copolymers thereof, and the like. Such (meth)acrylates include, for example, ethyl (meth)acrylate, propyl (meth)acrylate, butyl (meth)acrylate, and other alkyl (meth)acrylates; hydroxymethyl, hydroxyethyl (meth)acrylate, hydroxypropyl (meth)acrylate, hydroxybutyl (meth)acrylate, hydroxypentyl (meth)acrylate, and other hydroxyalkyl (meth)acrylates, and the like.

Examples include BR-60 (Tg: 75°C), BR-64 (Tg: 55°C), BR-75 (Tg: 90°C), BR-77 (Tg: 80°C), BR-83 (Tg: 105°C), BR-87 (Tg: 105°C), BR-88 (Tg: 105°C), BR-90 (Tg: 65°C), BR-93 (Tg: 50°C), BR-95 (Tg: 80°C), BR-105 (Tg: 50°C), BR-106 (Tg: 50°C), BR-107 (Tg: 50°C), BR-108 (Tg: 90°C), BR-113 (Tg: 75°C), BR-115 (Tg: 50°C), and BR-116 (Tg: 50°C) under the DIANAL Series by Mitsubishi Rayon Co., Ltd., and the like.

### (Cellulose-based Resins)

The cellulose-based resins that may be contained in the non-aqueous inkjet ink composition proposed by the present invention include nitrocellulose (nitro group-substituted product), cellulose acetate, cellulose acetate propionate, cellulose acetate butyrate, and other lower acyl group-substituted products, methyl cellulose, ethyl cellulose, and other lower alkyl-substituted products, and the like.

### (Vinyl Chloride-Vinyl Acetate-based Resins)

The vinyl chloride-vinyl acetate-based resins that may be used in the present invention are basically vinyl chloride-vinyl acetate copolymers whose essential components are vinyl chloride and vinyl acetate. They may also be copolymers obtained by adding and copolymerizing other radically polymerizable monomers as necessary, in which case copolymers to which amino groups have been introduced, either by using a compound whose ester bond at a vinyl acetate-derived site has been saponified and which also contains amino groups as other radically polymerizable monomer, or by causing an amino group-containing hydrocarbon compound to dehydrochlorination-react with a vinyl chloride-derived site, such as amino group-containing vinyl chloride-vinyl acetate-vinyl alcohol-based copolymers, can also be used.

Among such vinyl chloride-vinyl acetate-based resins, any copolymer of vinyl chloride monomer and vinyl acetate monomer conventionally used in ink compositions can be used.

Specific examples include SOLBIN C, SOLBIN CL, SOLBIN CH, SOLBIN CN, SOLBIN C5R, SOLBIN A, SOLBIN AL, SOLBIN TA2, SOLBIN TA3, SOLBIN TAO, SOLBIN TA5R, SOLBIN M, SOLBIN ME, SOLBIN MFK (all by Nissin Chemical Industry Co., Ltd.), VINNOL E15/48A, VINNOL E22/48A, VINNOL E14/45, VINNOL H14/36, VINNOL H40/55, VINNOL E15/45M (all by Wacker Chemie AG), and the like.

Also, as a vinyl chloride-vinyl acetate-based resin, preferably one of 85% vinyl chloride-15% vinyl acetate is used.

Particularly, in the case of a vinyl chloride-vinyl acetate copolymer having hydroxyl groups obtained by partially saponifying the acetic acid ester part, the film properties and dissolution behaviors of the resin are determined by the ratio of its constitutional unit based on the reaction site of vinyl chloride (Formula 1 below), constitutional unit based on the reaction site of vinyl acetate (Formula 2 below), and constitutional unit based on the saponification of the reaction site of vinyl acetate (Formula 3 below), in the molecule.

To be specific, the constitutional unit based on the reaction site of vinyl chloride adds strength and hardness, while the constitutional unit based on the reaction site of vinyl acetate adds adhesion and flexibility, to the resin film, whereas the constitutional unit based on the saponification of the reaction site of vinyl acetate adds to the ink good solubility in organic solvent systems, in consideration of the environment.

Formula 1 -CH₂-CHCl-

Formula 2 -CH₂-CH(OCOCH₃)-

Formula 3 -CH₂-CH(OH)-

### (Amino Group-containing Vinyl Chloride-Vinyl Acetate-Vinyl Alcohol-based Resins)

The amino group-containing vinyl chloride-vinyl acetate-vinyl alcohol-based resins that may be used in the present invention are constituted by a vinyl chloride unit, a vinyl acetate unit, a vinyl alcohol unit, and an amino group-containing unit. It should be noted that the vinyl chloride unit, and vinyl acetate unit, each refer to a unit constituted by an ethylene chain produced by cleaving an unsaturated double bond and by residual non-unsaturated-double-bond groups of a monomer bonded to the chain, at the respective site occupied in the copolymer resulting from the reaction of vinyl chloride and vinyl acetate. In other words, the vinyl chloride unit is a unit expressed by [-CH₂-CHCl-], while the vinyl acetate unit is a unit expressed by [-CH₂-CH(OCOCH₃)-]. Also, the vinyl alcohol unit is a unit constituted by an ethylene chain resulting from the saponification reaction, and consequent hydrolysis, of the ester bond in the vinyl acetate unit and by hydroxyl groups bonded to the chain, expressed by [-CH₂-CH(OH)-]. Additionally, the amino group-containing unit, when an amino group-containing compound is used as other radically polymerizable monomer, is a unit constituted by an ethylene chain produced by cleaving a radically polymerizable unsaturated double bond and by residual non-unsaturated-double-bond groups of a monomer bonded to the chain, expressed by [-CH₂-CHX-] (X represents residual non-unsaturated-double-bond groups of the monomer including amino groups); when an amino group-containing hydrocarbon compound is introduced by causing it to dehydrochlorination-react with the vinyl chloride unit, on the other hand, it is a unit constituted by the vinyl chloride unit whose chlorine has been substituted by residual groups of the amino group-containing hydrocarbon compound less one hydrogen, expressed by [-CH₂-CHY-] (Y represents residual groups of the amino-group containing hydrocarbon compound less one hydrogen).

For the method for manufacturing this amino group-containing vinyl chloride-vinyl acetate-vinyl alcohol-based copolymer, it can be obtained, for example, by obtaining a copolymer of vinyl chloride, vinyl acetate, and a monomer having an amino group-containing ethylenic unsaturated double bond, and then saponifying it and partially converting the vinyl acetate unit to a vinyl alcohol unit to serve as an amino group-containing unit. The aforementioned amino group-containing ethylenic unsaturated double bond monomer may be a (meth)acrylic acid dialkylamino alkyl ester expressed by General Formula (1): 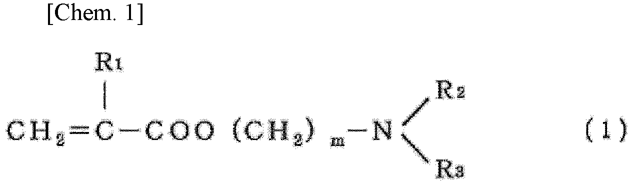 (in the formula, R₁ represents a hydrogen atom or methyl group, R₂ and R₃ each independently represent a monovalent hydrocarbon group, and m is an integer of 1 to 6). In General Formula (1) above, the alkylene group expressed by the formula (CH₂)m may be a methylene group, ethylene group, trimethylene group, propylene group, tetramethylene group, butylene group, or the like. The monovalent hydrocarbon groups expressed by R₂ and R₃ may be a methyl group, ethyl group, propyl group, isopropyl group, butyl group, or other alkyl group with 1 to 6 carbon atoms, or the like. Specific examples of the amino group-containing ethylenic unsaturated double bond monomer expressed by General Formula (1) above include dimethylaminoethyl (meth)acrylate, diethylaminoethyl (meth)acrylate, dimethylaminopropyl (meth)acrylate, diethylaminopropyl (meth)acrylate, and the like. Besides the monomers expressed by General Formula (1) above, dimethylaminopropyl acrylamide, dimethyl acrylamide, acrylamide, and the like, can also be used as the amino group-containing ethylenic unsaturated double bond monomer.

Another method for manufacturing the amino group-containing vinyl chloride-vinyl acetate-vinyl alcohol-based copolymer is a method whereby a vinyl chloride-vinyl acetate copolymer is treated by the saponification/amine modification method in the presence of an amine compound to partially convert the vinyl acetate units to a vinyl alcohol unit, while also causing some chlorine atoms in the vinyl chloride unit to react with the amine compound, thereby introducing amino groups to the side chain to obtain an amino group-containing unit. The amine compound may be an aliphatic amine, alicyclic amine, aromatic amine, or the like. Specific examples include ethylamine, propylamine, butylamine, cyclohexylamine, ethanolamine, naphthylamine, aniline, O-toluidine, diethylamine, dibutylamine, diisobutylamine, dioctylamine, diethanolamine, N-methylaniline, trimethylamine, triethylamine, tributylamine, triisobutylamine, N-methyldiphenylamine, triethanolamine, and the like.

Also, from the viewpoints of the discharge stability of the ink and its adhesion to the target recording medium, preferably an amino group-containing vinyl chloride-vinyl acetate-vinyl alcohol-based copolymer whose ratio of the vinyl alcohol unit in the copolymer is 4.0 to 7.0% by mass can be used. If the ratio of the vinyl alcohol unit in the copolymer is under 4.0% by mass, adhesion tends to drop; if it exceeds 7.0% by mass, on the other hand, discharge stability tends to drop.

Also, in the amino group-containing vinyl chloride-vinyl acetate-vinyl alcohol-based copolymer, preferably the amino group-containing vinyl chloride unit and vinyl acetate unit are contained at a ratio by mass in a range of amino group-containing vinyl chloride unit/vinyl acetate unit = 80/20 to 99/1.

In addition, preferably the content of the amino group-containing unit in the amino group-containing vinyl chloride-vinyl acetate-vinyl alcohol-based copolymer is 0.1 to 5.0% by mass in the copolymer. If the ratio of the amino group-containing unit is under 0.1% by mass, discharge stability tends to drop.

Preferably the amino group-containing vinyl chloride-vinyl acetate-vinyl alcohol-based copolymer is one whose number-averaged molecular weight is in a range of 10,000 to 50,000. If the number-averaged molecular weight exceeds the aforementioned range, rising viscosity tends to make ink discharge from nozzles difficult.

Commercial products of the amino group-containing vinyl chloride-vinyl acetate-vinyl alcohol-based copolymer include SOLBIN TAO, SOLBIN TAOL (both by Nissin Chemical Industry Co., Ltd.), and the like.

It should be noted that, to the extent that the effects of the present invention are not impaired, resins other than the aforementioned acrylic-based resins, cellulose-based resins, and vinyl chloride-vinyl acetate-based resins, such as, for example, vinyl chloride-based resins, vinyl chloride-acrylic-based resins, ethylene-vinyl acetate-based resins, styrene-acrylic-based resins, styrene-maleic acid-based resins, rosin-based resins, rosin ester-based resins, petroleum resins, coumarone indene-based resins, terpene phenol-based resins, phenol resins, urethane resins, melamine resins, urea resins, epoxy-based resins, xylene resins, alkyd resins, aliphatic hydrocarbon resins, butyral resins, maleic acid resins, fumaric acid resins, and the like, can also be combined.

Particularly when a vinyl chloride-vinyl acetate-based resin is combined, the vinyl chloride-vinyl acetate-based resin can be compounded by preferably 1.0 to 15.0 parts by mass, or more preferably 2.0 to 12.0 parts by mass, or yet more preferably 3.0 to 10.0 parts by mass, relative to 100 parts by mass of the acrylic-based resin or vinyl chloride-vinyl acetate-based resin.

It should be noted that a cycloolefin-based resin may or may not be contained. Also, the present invention has a property to dry under irradiation of specific energy rays, and no polymerizable monomers are contained in the ink composition.

### (Pigment Dispersants)

For the pigment dispersants that may be contained in the non-aqueous inkjet ink composition proposed by the present invention, ionic or nonionic surfactants, anionic, cationic, or nonionic polymeric compounds, and the like, can be used.

Particularly preferred are those constituted by polymeric compounds; for example, carbodiimide-based compounds described in Japanese Patent Laid-open No. 2004-083872, International Patent Laid-open No. 2003/076527, or International Patent Laid-open No. 2004/000950, AJISPER PB821, 822 (both by Ajinomoto Fine-Chemical Co., Inc.) being basic functional group-containing copolymers (whose acid value and amine value are both 10 to 20 mgKOH/g), SOLSPERSE 56000, SOLSPERSE 32000, SOLSPERSE 39000 (all by Lubrizol Corporation), DISPER BYK Series (BYK-Chemie GmbH), and the like, are preferred. Any one type of these pigment dispersants can be used, or two or more types can be mixed.

In particular, basic functional group-containing copolymers with an amine value of 10.0 to 40.0 mgKOH/g are preferred.

It should be noted that the aforementioned pigment dispersants are each selected and used as deemed appropriate according to the pigment type and types of organic solvents used.

### (Organic Solvent(s))

The evaporation rate of 20 to 80 based on the evaporation rate of butyl acetate being 100, as it pertains to an organic solvent under the present invention, is obtained by the measurement method described in ASTM D3539-87 and represents a value of an evaporation rate obtained according to the formula below by measuring the evaporation time of n-butyl acetate and that of the test solvent at 25°C in dry air:{(Time needed for 90% by mass of n-butyl acetate to evaporate) / (Time needed for 90% by mass of test solvent to evaporate)} x 100

The organic solvent(s) whose evaporation rate is 20 to 80 based on the evaporation rate of butyl acetate being 100 is/are contained in such a way that it/they is/are contained by 80.0% by mass or more in the non-aqueous inkjet ink composition. Additionally, it is preferably 82.0% by mass or more, or more preferably 84.0% by mass or more. Also, it is preferably 93.0% by mass or less, or more preferably 90.0% by mass or less. If it is less than 80.0% by mass, the heating temperature must be raised or heating time extended in the drying process, which can cause the printed layer constituting the underlayer to deteriorate.

Each of the organic solvents contained in the non-aqueous inkjet ink composition proposed by the present invention has an evaporation rate of preferably 75 or lower, or more preferably 70 or lower, or yet more preferably 50 or lower, based on the evaporation rate of butyl acetate being 100. Also, it is preferably 25 or higher, or more preferably 30 or higher. In particular, preferably the non-aqueous inkjet ink composition proposed by the present invention contains solvents whose evaporation rate is 25 or higher based on the evaporation rate of butyl acetate being 100, or preferably it only contains solvents whose evaporation rate is 25 or higher based on the evaporation rate of butyl acetate being 100.

For such organic solvent, propylene glycol monomethyl ether acetate (evaporation rate 44), ethyl lactate (evaporation rate 22), propylene glycol monomethyl ether (evaporation rate 71), xylene (evaporation rate 68), tripropylamine (evaporation rate 20), mesitylene (evaporation rate 22), dibutyl ether (evaporation rate 43), nonane (evaporation rate 39), mesitylene (evaporation rate 22), isobutyl alcohol (evaporation rate 64), 1-butanol (evaporation rate 47), ethylene glycol monomethyl ether (evaporation rate 53), ethylene glycol monoethyl ether (evaporation rate 38), 1-ethoxy-2-propanol (evaporation rate 34), and propylene glycol monopropyl ether (evaporation rate 22) are preferred.

To the extent that the effects of the present invention are not impaired, other known organic solvents whose evaporation rate is under 20 or over 80 can be used in combination; however, such other known organic solvents need not be used in combination.

Also, diethylene glycol diethyl ether or other alkylene glycol dialkyl ether, ethylene glycol monobenzyl ether or ethylene glycol monophenyl ether, 3-methoxybutanol, ethylene glycol monobutyl ether acetate, or ethylene glycol diacetate may or may not be contained.

### (Other Components)

Furthermore, in the non-aqueous inkjet ink composition proposed by the present invention, surfactant, plasticizer, surface conditioner, ultraviolet protective agent, photostabilizer, antioxidant, and various other additives can be used as necessary.

### (Manufacturing of Non-aqueous Inkjet Ink Composition)

Next, the method for manufacturing the non-aqueous inkjet ink composition proposed by the present invention using these materials is explained.

The non-aqueous inkjet ink composition proposed by the present invention can be obtained, for example, by dispersing and mixing the materials using a wet-circulation mill, bead mill, ball mill, sand mill, attritor, roll mill, DCP mill, agitator, Henschel mixer, colloid mill, ultrasonic homogenizer, high-pressure homogenizer (Microfluidizer, Nanomizer, Ultimizer, Genus PY, DeBEE 2000, etc.), pearl mill, or other dispersion machine, and adjusting the viscosity of the non-aqueous inkjet ink composition to between 2.0 and 10.0 mPa·s.

Preferably the content of all organic solvents in the non-aqueous inkjet ink composition proposed by the present invention, which is the total quantity of ink composition less the total sum of the quantities of resin, pigment, pigment dispersant, and other additives used as necessary, is changed as deemed appropriate so that the viscosity of the ink falls in the aforementioned range.

The thus-obtained non-aqueous inkjet ink composition proposed by the present invention is printed using any known inkjet printer. The base printing material may be one with a printed layer formed on it by printing beforehand. It may also be a base material with no printed layer formed on it beforehand. In particular, it can be used in situations where the base material or any printed layer formed thereon beforehand softens/shrinks easily when heated.

### (Applications)

The non-aqueous inkjet ink composition proposed by the present invention can be used in any known applications where the target printing face is a resin base material. It can also be used in applications where the target printing face is the surface of a printed area formed beforehand on a base material surface constituted by any given material.

### (Method for Printing)

Following printing with a known inkjet printer using the non-aqueous inkjet ink composition proposed by the present invention as described above, the ink composition can be dried/solidified quickly by irradiating infrared light. In this case, the target base printing material may be resin, paper, or metal. However, the target base printing material may also be constituted by a material that easily wrinkles or deforms when heated excessively, and a resin base material is preferred, or a thermoplastic resin base material is more preferred. If a resin base material is adopted, a polyolefin-based resin, polyvinyl chloride-based resin, polyvinyl alcohol-based resin, acrylic-based resin, polyester-based resin, polyamide-based resin, or other known resin can be adopted. Since the irradiated infrared light is absorbed by the carbon black contained in the non-aqueous inkjet ink composition proposed by the present invention, the energy of irradiated infrared light can be efficiently used for heating. If the colorant is other than carbon black, the energy of infrared light to be irradiated must be increased considerably, and this increases the chances of an excessive rise in the temperature of the resin base material constituting the target base printing material.

For the infrared light of concern here, an infrared light having a peak at 0.90 to 1.25 µm can be adopted, and within this range, the wavelength is preferably 1.00 µm or longer, or more preferably 1.05 µm or longer, and preferably 1.20 µm or shorter, or more preferably 1.15 µm or shorter.

Also, preferably the irradiation time of infrared light is in a range that allows the printed non-aqueous inkjet ink composition to dry/solidify, while at the same time preventing the drying speed from lagging excessively behind the speed of printing with the inkjet printer. To achieve drying/hardening within the irradiation time in such range, preferably the output of infrared light is 2.0 kW or higher.

It should be noted that preferably the infrared light source is placed at as close a distance as possible to the surface of the printed non-aqueous inkjet ink composition. This distance is approx. 1.0 to 15.0 mm, and in this range, the distance may be 2.0 mm or longer, or 3.0 mm or longer, and 12.00 mm or shorter, or 10.0 mm or shorter.

If the intensity of the irradiated infrared light is too strong and the base printing material is resin, the temperature at the base printing material surface can become excessively high, and the base printing material surface can be wrinkled, warped, bent, or otherwise damaged as a result.

### Examples

The present invention is explained in greater detail below by citing examples; however, the present invention is not limited to these examples. It should be noted that, unless otherwise specified, "%" means "% by mass," while "part" means "part by mass."

The materials used in the Examples and Comparative Examples below are listed below. All components other than the organic solvents are based on solids content.

The unit of value in the respective component fields and total fields in the Tables is "% by mass."
<Carbon Black>
   Bk7: Carbon Black MA7 (Mitsubishi Chemical Corporation)
<Black Dye>
   Solvent Black 29: Orasol Black RLI (BASF SE)
<Pigment Dispersant>
   SOLSPERSE 32000 (Lubrizol Corporation)
<Resins>
   DIANAL BR-83: Acrylic resin (Mitsubishi Rayon Co., Ltd.)
   SOLBIN TAO: Amino group-containing vinyl chloride-vinyl acetate-vinyl alcohol-based copolymer (Nissin Chemical Industry Co., Ltd.)

### (Examples 1 to 5, Comparative Examples 1 to 5, Reference Examples 1 to 4)

### <Manufacturing of Non-aqueous Inkjet Ink Compositions>

Each material was mixed under agitation according to the recipes in Table 1 and Table 2 (compounding ratios of the materials are based on % by mass) to obtain the non-aqueous inkjet ink compositions in the Examples, Comparative Examples, and Reference Examples, respectively.

### <Method for Printing>

The non-aqueous inkjet ink compositions in the Examples, Comparative Examples, and Reference Examples were loaded, respectively, in a commercial inkjet printer and printed solid in a high-speed printing mode on an oriented polypropylene film (product name P-2161, thickness 25 µm, Toyobo Co., Ltd.). Onto this printed area, an infrared light with a peak at 1.10 µm and an output of 2.3 to 7.5 kW was irradiated for 0.1 seconds from a distance of 10 mm to dry/harden the ink composition, to obtain printed matters pertaining to the Examples, Comparative Examples, and Reference Examples, respectively.

These printed matters were measured/evaluated for the properties below. It should be noted that the evaluation relating to damage to the base material was performed in two different ways-by printing the ink composition when there was no printed data, and by printing the ink composition when there was data already printed.

### <Discharge Stability>

Using a commercial inkjet printer, the ink compositions in the Examples, Comparative Examples, and Reference Examples are each printed solid in a high-speed printing mode, after which the printer is left idle for 1 minute without ink discharge, and subsequently the ink composition is discharged again to measure the number of nozzles that misfire.
O: Discharge at all nozzles
×: Occurrence of a misfire at one or more nozzles

### < Drying Property>

A cotton swab is pressed perpendicularly against each of the printed matters created by the aforementioned method, and rubbed in one direction, to make a determination based on whether or not the ink attaches to the cotton swab.
O: The ink does not attach.
×: The ink attaches.

### <Damage to Base Material (No Printed Data)>

The evaluation pieces created by the aforementioned method are visually observed to determine if there is any change in appearance.
O: There is no change.
×: Changes such as holes, wrinkles, and surface warpage are observed.

### <Damage to Base Material (Data Already Printed)>

A gravure ink for surface printing (Superior Black Ink, Sakata Inx Corporation) is used to perform gravure printing under the conditions below to form solid images in the front one-half areas, in the moving direction, of A4-size base material films (product name P-2161, thickness 25 µm, Toyobo Co., Ltd.). Next, the non-aqueous inkjet ink compositions in the Examples, Comparative Examples, and Reference Examples are printed in the remaining one-half areas, respectively, and dried under the conditions above, and the created evaluation pieces are visually observed to determine if there is any change in appearance.
O: There is no change.
×: Changes such as holes, wrinkles, and surface warpage are observed.

### (Conditions for Gravure Printing)

Base material film: Oriented polypropylene film (product name P-2161, thickness 25 µm, Toyobo Co., Ltd.)
Printing machine: Gravure proofing press
Ink printing plate: Helio 175ine/inch (Pattern: Solid printing plate) Printing speed: 80 m/min
Drying condition: 80°C

**[Table 1]**

| | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| Bk7 | 3.0 | 3.0 | 8.0 | 3.0 | 3.0 | 2.0 | 11.0 | 3.0 | 3.0 | |
| Solvent Black 29 | | | | | | | | | | 3.0 |
| SOLSPERSE 32000 | 1.2 | 1.2 | 3.2 | 1.2 | 1.2 | 0.8 | 4.4 | 1.2 | 1.2 | |
| Propylene glycol monomethyl ether acetate | 42.9 | 42.9 | 39.4 | 45.4 | 42.9 | 43.6 | 37.3 | | | 43.5 |
| Ethyl lactate | 42.9 | 42.9 | 39.4 | 45.4 | | 43.6 | 37.3 | | | 43.5 |
| Propylene glycol monomethyl ether | | | | | 42.9 | | | | | |
| Dipropylene glycol dimethyl ether | | | | | | | | 85.8 | | |
| Butyl acetate | | | | | | | | | 85.8 | |
| DIANAL BR-83 | 10.0 | 10.0 | 10.0 | | 10.0 | 10.0 | 10.0 | 10.0 | 10.0 | 10.0 |
| SOLBIN TAO | | | | 5.0 | | | | | | |
| Total | 100.0 | | | | | | | | | |
| Irradiation intensity (output) (kW) | 2.3 | 3.8 | 2.3 | 2.3 | 2.3 | 2.3 | 2.3 | 2.3 | 2.3 | 2.3 |
| Discharge stability | ○ | ○ | ○ | ○ | ○ | ○ | x | ○ | x | ○ |
| Drying property | ○ | ○ | ○ | ○ | ○ | x | ○ | x | ○ | x |
| Damage to base material (no printed data) | ○ | ○ | ○ | ○ | ○ | ○ | ○ | ○ | ○ | ○ |
| Damage to base material (data already printed) | ○ | ○ | ○ | ○ | ○ | ○ | ○ | ○ | ○ | ○ |

**[Table 2]**

| | Reference Examples | | | |
|---|---|---|---|---|
| | 1 | 2 | 3 | 4 |
| Pigment Blue 15:4 | 3.0 | | 3.0 | |
| Pigment Red 122 | | 3.0 | | 3.0 |
| SOLSPERSE 32000 | 1.2 | 1.2 | 1.2 | 1.2 |
| Propylene glycol monomethyl ether acetate | 42.9 | 42.9 | 42.9 | 42.9 |
| Ethyl lactate | 42.9 | 42.9 | 42.9 | 42.9 |
| Propylene glycol monomethyl ether | | | | |
| Dipropylene glycol dimethyl ether | | | | |
| Butyl acetate | | | | |
| DIANAL BR-83 | 10.0 | 10.0 | 10.0 | 10.0 |
| SOLBIN TAO | | | | |
| Total | 100.0 | | | |
| Irradiation intensity (output) (kW) | 2.3 | | 7.5 | |
| Discharge stability | ○ | ○ | ○ | ○ |
| Drying property | x | x | x | x |
| Damage to base material (no printed data) | ○ | ○ | ○ | ○ |
| Damage to base material (data already printed) | ○ | ○ | x | x |

According to the respective Examples, demonstrated are excellent effects of the non-aqueous inkjet ink composition such as discharge stability, drying property, and prevention of damage to the base material. Particularly when printed on a base material with data already printed, i.e., having a printed layer already formed thereon by a black ink composition containing carbon black, they still demonstrated an effect of being printable on the printed area with data already printed in a manner causing no change in appearance.

However, Comparative Example 1 with low carbon black concentration was poor in drying property, while Comparative Example 2 with high carbon black concentration was poor in discharge stability. Additionally, Comparative Examples 3 and 4 not using organic solvents as described in the present invention were poor in drying property or discharge property. Also, Comparative Example 5 using a black colorant other than carbon black was poor in drying property.

It should be noted that, in the case of Comparative Examples 1 and 3 demonstrating poor drying property, continuous irradiation of infrared light until drying was complete caused the printed base material film to wrinkle, etc., due to heat.

Furthermore, among Reference Examples 1 to 4 adopting the same base material film as in the Examples but using a pigment of non-black color, Reference Examples 1 to 4 adopting different irradiation intensities of infrared light exhibited poor drying property. Additionally, Reference Examples 3 and 4 with a higher irradiation intensity of infrared light caused significant damage to the base material in that wrinkles formed on the base material surface, even though the irradiation intensity of infrared light was not strong enough to achieve sufficient drying.

## Claims

1. A non-aqueous inkjet ink composition for printing on a resin base material, containing:
2.5 to 10.0% by mass of carbon black;
80.0% by mass or more of organic solvent(s) whose evaporation rate is 20 to 80 based on an evaporation rate of butyl acetate being 100; and
a resin; and
having a property to dry under irradiation of infrared light.

2. The non-aqueous inkjet ink composition according to claim 1, intended for printing on a printed layer provided on a resin base material.

3. The non-aqueous inkjet ink composition according to claim 1 or 2, wherein the resin contained in the non-aqueous inkjet ink composition comprises at least one type, or more types, selected from acrylic-based resins, cellulose-based resins, and vinyl chloride-vinyl acetate-based resins.

4. The non-aqueous inkjet ink composition according to claim 1 or 2, containing 80.0% by mass or more of organic solvents whose evaporation rate is 30 to 60 based on an evaporation rate of butyl acetate being 100.

5. A method for printing with a non-aqueous inkjet ink composition, comprising:
inkjet-printing on a target base printing material constituted by resin and/or printed area already formed on the target base printing material surface, using a non-aqueous inkjet ink composition containing:
2.5 to 10.0% by mass of carbon black;
80.0% by mass or more of organic solvent(s) whose evaporation rate is 20 to 80 based on an evaporation rate of butyl acetate being 100; and
a resin; and
drying by irradiation of infrared light.
